# EUROPEAN PATENT APPLICATION

(11) **EP 1 533 096 A1**
(43) Date of publication of application: **25.05.2005**
(21) Application number: 04024890.8
(22) Date of filing: 20.10.2004
(51) Int. Cl.: B29C 45/26, B05B 1/00, F16L 43/00, B08B 13/00

(54) **A manufacturing process for water-cleaning guns.**

(30) Priority: 13.11.2003 IT RE20030109
(71) Applicant: Arrow Line S.R.L., 42048 Rubiera (Reggio Emilia) (IT)
(72) Inventor: Amaduzzi, Roberto, 42048 Rubiera (Reggio Emilia) (IT)
(74) Representative: Gotra, Stefano

(57) **Abstract**

The process is for producing in particular an internal conduit (2) and is applied using a mould (1) for realising a plurality of internal conduits (2) for transport of a liquid which is entirely made of plastic material. The mould (1) includes a top die (5) which is translatable with respect to a bottom die (7) and also includes two cores (16, 17) for realising internal profiles of the internal conduit (2), and an extraction plate (19) associated to a plurality of extractors (20, 20a) for expelling internal conduits (2) from the mould (1) at completion of the production process.

## Description

The production process relates to a moulding process of a liquid conduit internal of a water gun, comprising an interception device of the fluid.

Water-cleaning guns are known in the prior art, and are connected to water-cleaning machines, and often include various forms of internal conduits for transport of a liquid, which conduits are shaped according to the performance type required of the guns, and the market sectors the guns are aimed at.

The guns, which work at high pressure regimes, have to be able to support the pressures they work at, preventing any possibility of internal explosion and thus ensuring a reliable working life. They also obviously have to guarantee a good seal of the liquid running through them.

To prevent the problems cited above, in the prior art the internal liquid transport conduit is generally made of an assembly of metallic conduits.

More precisely, the assembly is composed of a first tract of conduit which is connected to the detergent liquid aspiration pipe, and internally contains a ball mechanism for opening and closing the liquid supply at the moment when the operator presses the gun trigger to activate the mechanism.

A second tract of conduit is connected to the first tract, for expulsion of the pressurised liquid.

The connection of the two tracts is realised preferably by a thread, which requires a rather laborious assembly stage.

This production process, apart from having the disadvantage of incurring high production costs due to the choice of materials, also has the further drawback of slow manufacturing times of the single components and the complexity of the assembly stages which lengthen production times.

Consequently, in order to reduce production costs, some gun models have been produced in which the transport conduit is made of a plastic material, which however leads to a compromise in relation to the technical functioning characteristics.

The realisation of the whole assembly in plastic implicates the use of three components.

In addition to the first and second tracts of conduit, an obturator mechanism is interpositioned, which has the function of the ball mechanism as described above.

This mechanism has many functional limitations, among which seal problems due to the presence of many organs and the possibility of excessive play appearing between them.

Furthermore, in this embodiment there is the drawback of an uncertain action mechanism of the gun, which is rendered difficult due to the presence of a return spring in opposition to the obturator mechanism, which contrasts the friction and at the same time generates an elastic behaviour which retards the actioning and arresting phases of the gun.

Although production costs have been lowered by the choice of plastics for the materials, the appearance of an additional component, also in plastic, is not very significant in terms of final production costs, but does make assembly times longer.

The main aim of the present invention is to provide a process for production of the internal liquid transport conduit, with which a good compromise between production costs, assembly costs and technical, functional and duration performance can be reached.

These aims and advantages, and more besides, are all attained by the invention as it is characterised in the claims that follow.

The invention is described herein below in detail, with reference to the accompanying figures of the drawings, which illustrated a preferred embodiment.
Figure 1 is a schematic view in section of an open mould for production of a water gun;
figure 2 is a view in section of a closed mould for production of a water gun, in which a plastic material has been injected;
figure 3 is a section view of an open mould for production of a water gun in which the moulded parts have been extracted;
figure 4 is a detailed view of separation by breakage between the sprue and the moulded part;
figure 5 is a schematic view in section of the injection chamber during insertion of the core elements;
figure 6 is a detail showing the coupling between the two cores;
figure 7 is a schematic view in section of the injection chamber of the material during extraction of the pair of cores.

With reference to the above-cited figures, 1 denotes in its entirety a mould installed on a press of known type and not illustrated.

The mould 1 exhibits a plurality of injection chambers 12, preferably four, each of which is for moulding a liquid transport conduit 2 constituting the internal part of the water gun.

The mould 1 is subdivided into a mobile part 4, comprising a top die 5, and a fixed part, comprising a bottom die 7 and a rest base 8.

The rest base 8 internally exhibits a cavity 9 for containing the bottom die 7. The top die 5 and the bottom die 7 exhibit a plurality of coaxial through-holes 10, preferably parallel.

The plurality of holes 10 is coupled to a respective plurality of rods 11 in order to enable the top die 5 to translate with respect to the bottom die 7, from a detached position to a position of contact.

The top die 5 exhibits a lower surface 5a which, in the contact position, is near to an upper surface 7a of the bottom die 7, in order to generate a common forming plane 21 of the moulded internal liquid transport conduits 2.

Internally of the plurality of rods 11 and at the position of the forming plane 21, the top and bottom dies afford the injection chambers 12 for moulding the internal conduits 2 for transporting liquid.

Each injection chamber 12 communicates with a common injection channel 13 which is a vehicle for pressure-injection of a molten plastic material.

During solidification of the internal conduits 2, a sprue 22 also solidifies within the injection channel 13.

The injection channel 13 exhibits a first tract 14 which crosses the top die 5.

The first tract 14 exhibits, on the top of the top die 5, an inlet 14a which proceeds internally thereof with a plurality of branches 14b, one for each injection chamber 12, each terminating on the lower surface 5a of the top die 5 at the position of the forming plane 21.

The injection channel 13 proceeds with a plurality of second tracts 15 which from the upper surface 7a of the bottom die 7 proceed below the forming plane 21 up until they reach the injection chamber.

The second tracts 15 each exhibit a first end 15a which connects to a respective branch 14b, and a second end 15b which connects up to the injection chamber 12.

This conformation of the injection channel 13, and especially the plurality of second tracts 15, is made in this way in order to actuate a special injection technique known as submarine gate injection.

Each second tract 15 develops below the forming plane 21 in order to allow, during extraction of the internal conduits 2, an automatic breaking of the connection which forms between the sprue 22 and the moulded internal conduit 2.

In a second embodiment, not illustrated in the figures of the drawings, the injection channel 13 is constituted by a plurality of nozzles which inject a molten thermoplastic material directly into an injection chamber 12.

This conformation of the injection channel 13 is developed in order to obtain the process known as canal injection, preventing the formation of sprues and thus reducing to a minimum all waste materials.

The internal liquid transport conduit 2, which exhibits a first tract of conduit 3a connected to the aspiration tube and a second tract of conduit 3b for expelling the liquid, which first and second tracts of conduit are interconnected and arranged in an L shape, requires two cylindrical cores in order to form a single channel for passage of the fluid.

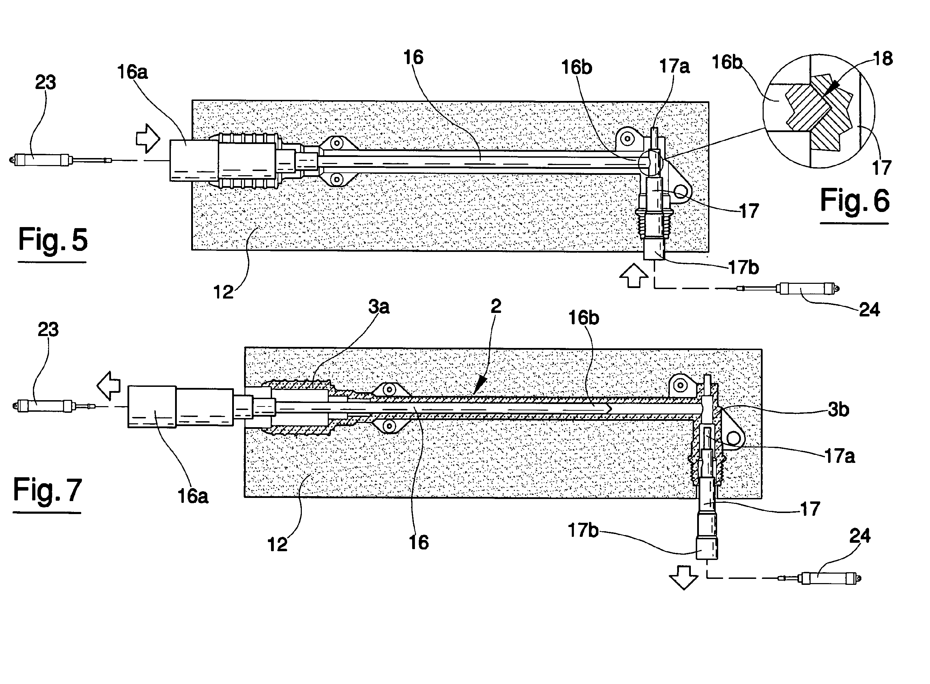

For this reason, before the material injection stage, a pair of cores 16, 17, are inserted into each injection chamber 12; the cores are respectively a long core 16 and a short core 17, and are illustrated in figures 5 and 7.

The short core 17 is friction-housed at ends thereof 17a, 17b, in respective chambers directed afforded in the injection chamber 12, while the long core 16 has a first end 16a which is friction-housed in a chamber afforded in the injection chamber 12, and a second end 16b, opposite the first end 16a, which has a plug-type end 18, illustrated in figure 6, which couples with the cylindrical part of the short core 17.

The coupling enables, during the moulding process, obtaining of a single passage channel, avoiding formation, at the intersection between the first tract of conduit 3a and the second tract of conduit 3b, of a film of plastic material which would have to be removed at the end of the moulding process.

An extraction plate 19 is coupled to the plurality of rods 11; the plate 19 is interpositioned between the rest base 8 and the bottom die 7, internally of the cavity 9, and can be translated from a rest position in contact with the bottom of the cavity 9 of the rest base 8 to a work position, in contact with the bottom die 7.

A plurality of extractors 20 is connected to the extraction plate 19, on the surface thereof which faces the bottom die 7. Each of the plurality of extractors 20 terminates in the injection chamber 12 and is for extracting the internal conduits 2 from the mould.

The plurality of extractors 20 comprises a central extractor 20a which terminates in the injection channel 13 and aids detachment of the sprue 22, which solidifies internally of the channel, from the internal liquid transport conduit 2.

The production process for water guns functions as in the following description.

The first stage, illustrated in figure 5, relates to the automatic positioning, using hydraulic pistons 23, 24, of the cores 16, 17 internally of the injection chamber.

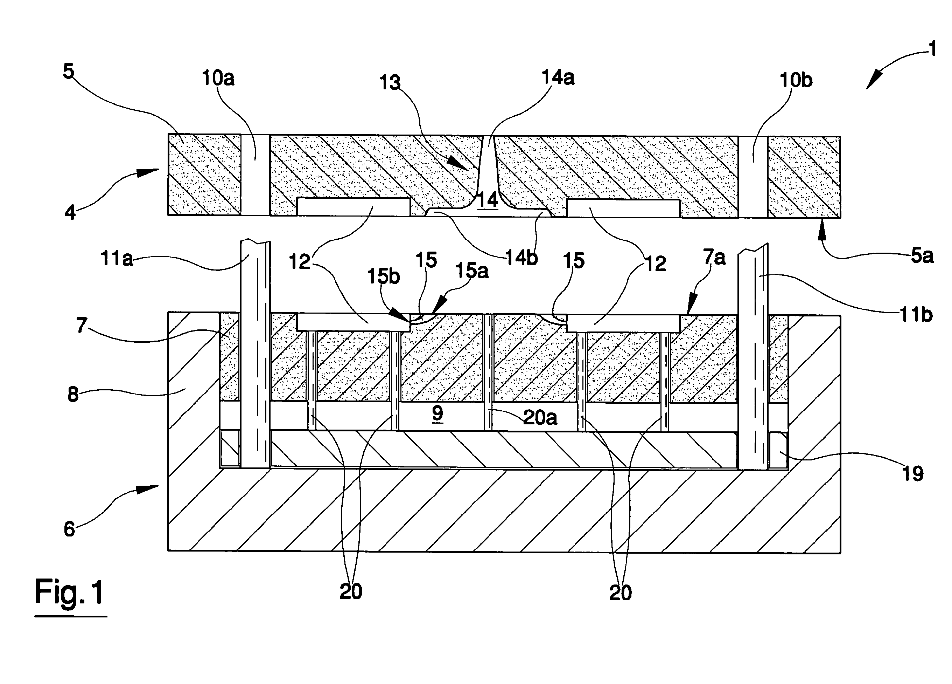

The positioning is done while the mould is open, as in figure 1, i.e. when the top die 5 is in the detached position, held up by the plurality of rods 11. First the short core 17 is positioned, then the long core 16, so that the end 16b of the long core 16 can be coupled by the plug 18 to the short core 17.

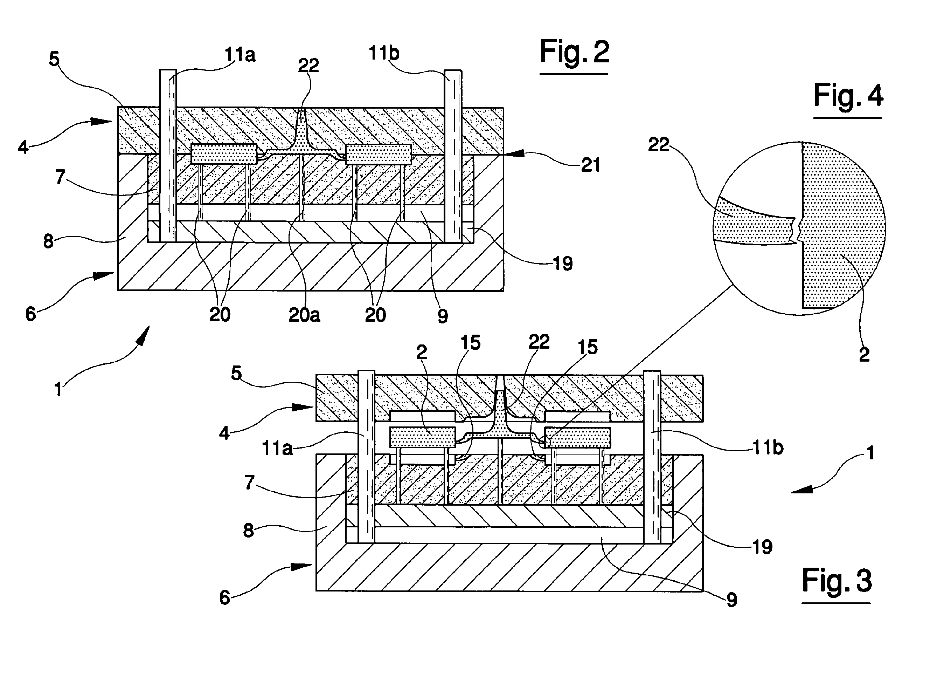

Following the translation of the top die 5 along the plurality of rods 11 into the contact position with the bottom die 7, the mould 1 is closed and the plastic material injected under pressure, see figure 2; the plastic material can be a thermoplastic mix, for example polyamide including 30% of glass fibre.

After the correct time lapse for solidification of the plastic material, the cores 16, 17 are extracted, as illustrated in figure 7.

The extraction operation is the reverse of the positioning operation, i.e. the long core 16 has to be extracted before the short core 17, so as correctly to disengage the plug 18 from the short core 17.

Following extraction of the cores 16, 17, the mould is opened, bringing the top die 5 into the detached position.

At this point the internal conduits 2 can be extracted from the injection chamber 12 by performing a translation of the extraction plate 19 and thereafter the plurality of extractors 20, along the plurality of rods 11, as illustrated in figure 3.

The location of the second tract 15 of the injection channel 13, means that during extraction the sprue, which has solidified internally of the injection channel 13, detaches automatically from the internal liquid transport conduits 2, which have just been formed, as shown in figure 4.

The second tract 15, below the forming plane 21 and internally of the bottom die 7, is a barrier to the free rising of the sprue, which breaks due to the cutting force generated following the forces exerted by the extractors 20 and 20a and the reaction of the second tract 15.

An advantage of the invention is to provide a moulding process which produces an internal conduit 2 of liquid transport made in a single piece of plastic material, which at the same time reduces production costs and assembly times.

A further advantage of the invention is to realise the internal liquid transport conduit in a plastic material which can internally contain a ball mechanism for opening and closing a liquid supply.

## Claims

1. A manufacturing process for water-cleaning guns, especially an internal conduit (2) of a water gun, using a mould (1) in which:
the mould (1) comprises a mobile part (4) comprising a top die (5), a fixed part (6) comprising a bottom die (7) and a rest base (8), and two cores, being a long core (16) and a short core ( 17);
the mobile part (4) translates with respect to the fixed part (6) by means of a plurality of rods (11) from a detached position from the fixed part (6) to a contact position with the fixed part (6);
the rest base (8) internally exhibits a cavity (9) for containing the bottom die (7) and an extraction plate (19);
the top die (5) exhibits a lower surface (5a) and the bottom die (7) exhibits an upper surface (7a) for generating a forming plane (21) at a contact position there-between;
the top die (5) and the bottom die (7) internally afford an injection chamber (12) communicating externally through an injection channel (13);
the production process of a water-cleaning gun being **characterised in that** it comprises stages of:
inserting the cores (16, 17) internally of the injection chamber (12);
closing the mould (1);
injecting material into the injection channel (13);
extracting the cores (16, 17);
opening the mould (1);
extracting the internal conduit (2) by means of the extraction plate (19).

2. The process of claim 1, **characterised in that** the injection channel (13) of the mould (1) has a first tract (14) which crosses the top die (5) and a plurality of second tracts (15) which are internal of the bottom die (7) and join to the first tract (14).

3. The process of claim 2, **characterised in that** the plurality of second tracts (15) develop below the forming plane (21).

4. The process of claim 1, **characterised in that** the mould (1) exhibits an injection channel (13) constituted by a plurality of nozzles which inject a molten thermoplastic material directly into the injection chamber (12).

5. The process of claim 1, **characterised in that** the insertion stage of the two cores (16, 17) includes insertion first of the short core (17) and then of the long core (16).

6. The process of claim 1, **characterised in that** the extraction stage of the cores (16,17) includes extraction first of the long core (16) and then of the short core ( 17).

7. The process of claim 1, **characterised in that** the cores (16, 17) are positioned angularly one to another.

8. The process of claim 6, **characterised in that** the cores (16, 17) preferably reciprocally form a right angle.

9. The process of claim 1, **characterised in that** the long core (16) exhibits at an end (1a) thereof a plug (18) for correctly angularly positioning the long core (16) and the short core (17).

10. The process of claim 1, **characterised in that** the mould (1) exhibits a plurality of injection chambers (12) for moulding a plurality of internal conduits (2).

11. An internal conduit for a liquid, for a water-cleaning gun, **characterised in that** it comprises at least two reciprocally intersecting tracts (3a, 3b), constituting a single piece made of plastic material.
